# FASCICULE DE BREVET EUROPEEN

(11) **EP 1 388 288 B1**
(45) Date de publication et mention de la délivrance du brevet: **20.04.2005**
(21) Numéro de dépôt: 03291940.9
(22) Date de dépôt: 01.08.2003
(51) Int. Cl.: A22B 7/00

(54) **Conteneur de stockage de cadavres d'animaux**
Behälter zur Lagerung von Tierkadavern
Container for storing carrions

(30) Priorité: 08.08.2002 FR 0210074
(43) Date de publication de la demande: 11.02.2004
(73) Titulaire: Crosnier, Rémy, 79310 Vouhe (FR)
(72) Inventeur: Crosnier, Rémy, 79310 Vouhe (FR)
(74) Mandataire: Thibon-Littaye, Annick

(56) Documents cités:
- EP-A- 0 950 868
- DE-U- 29 613 257
- FR-A- 2 712 774

## Description

La présente invention concerne la conception et la réalisation d'un conteneur de stockage de cadavres d'animaux destiné à être utilisé sur les sites d'élevage. Le conteneur suivant l'invention présente un grande facilité de chargement des cadavres, et de déchargement de son contenu dans la benne utilisée de façon habituelle pour l'évacuation des cadavres hors du site d'élevage. Il peut être utilisé en mode statique, porté ou tracté.

Par site d'élevage, on entend ici tous les sites ayant à gérer des animaux d'élevage ou autres, tels par exemple que les exploitations agricoles, les élevages industriels, les chenils, les meutes, les laboratoires d'expérimentation animale et les centres de recherche, les fourrières, les cabinets vétérinaires, les réserves et les zoos, cette liste n'étant pas exhaustive.

Lorsqu'un animal meurt dans un site d'élevage, il est généralement emporté par le service d'équarrissage pour être éliminé. Dans l'attente de cette opération, il est nécessaire de stocker de façon provisoire le cadavre sur le site d'élevage.

L'invention s'applique de manière particulièrement avantageuse au stockage de tous les animaux dont la taille ou le poids sont trop élevés pour permettre leur transport et leur stockage dans les dispositifs de conservation usuels tels que les congélateurs ou les chambres froides. L'invention concerne plus particulièrement les animaux de taille moyenne à grande qui doivent être stockés à l'unité ou en petites quantités en attente du ramassage par les équarrisseurs, dont notamment les bovins, ovins, caprins, veaux, poulains, gibiers, chiens...

L'invention n'est cependant pas limitative de ce type d'animaux, et le conteneur qu'elle propose peut également être utilisé pour le stockage d'animaux de taille et de poids moins importants, pour lesquels un grand nombre de cadavres est à conserver en vrac, tels que les volailles, porcelets, agneaux...

De même, le conteneur suivant l'invention peut également être utilisé pour le stockage des cadavres d'animaux qui ne sont pas destinés à être ramassés par les services d'équarrissage, mais à être éliminés ultérieurement sur place par enfouissement, incinération ou autre.

Lorsqu'un animal décède, les services d'équarrissage obligent à ce que le cadavre soit sorti des bâtiments, ramené au siège d'exploitation si mort au champ, et stocké à l'extérieur, à un endroit accessible par camion. Les équarrisseurs n'ayant pas l'obligation de se déplacer pour un cadavre ou un lot de cadavres dont le poids est inférieur à 40 kg, ou alors moyennant facturation, nombre d'éleveurs attendent d'avoir un poids suffisant d'animaux morts pour faire appel à leurs services.

De ce fait, les cadavres sont laissés à l'extérieur des bâtiments, pendant une durée qui peut aller de quelques heures à plusieurs jours. Ceci pose des problèmes sanitaires importants, en particulier durant l'été, car par temps chaud la décomposition des cadavres est très rapide. Les principales gênes occasionnées sont bien sûr de nature olfactive, mais aussi visuelle. De plus, conséquence plus grave, dans le cas d'un décès par maladie contagieuse, par exemple dans le cas de la fièvre aphteuse, un cadavre d'animal exposé à l'air libre pendant plusieurs jours constitue un facteur important de dissémination de la maladie.

Actuellement, il existe dans certaines exploitations agricoles des moyens de stockage des cadavres d'animaux de petite taille. Dans le cas par exemple de l'élevage industriel des volailles, le stockage dans des conditions hygiéniques des bêtes mortes s'effectue dans des bacs étanches ou des congélateurs de type ménager. Un tel stockage est rendu possible par la petite taille et le faible poids des animaux, qui peuvent être manipulés facilement et transportés à main d'homme.

Le brevet FR 2 712 774 décrit un container de stockage provisoire de cadavres d'animaux, dont les parois sont thermiquement isolées et qui comporte une ouverture supérieure pour son chargement, une trappe dans son fond pour son déchargement, et des moyens de préhension pour sa levée. Il est en outre pourvu d'un groupe frigorifique générant du froid en son intérieur. Ce container est destiné au stockage des animaux de petite taille dont le poids permet qu'ils soient soulevés et chargés par une ouverture supérieure, et il est particulièrement approprié aux besoins des élevages avicoles.

Contrairement à cet exemple, il n'existe actuellement aucun moyen de stockage dans les sites d'élevage des animaux de taille et de poids plus importants. Ainsi, de façon concrète, lorsque l'animal décède, l'éleveur dépose le cadavre sur le sol à l'extérieur des bâtiments de l'exploitation, si possible dans un endroit où il ne sera pas exposé en pleine vue, en attente de l'équarrisseur. Dans le meilleur des cas, le ou les cadavres sont recouverts d'une bâche ou d'une tôle, ou enfermés dans un sac, de façon à être moins visibles. De plus, pour les animaux paissant dans les prés, souvent loin du site d'exploitation, il se pose également un problème de transport du cadavre jusqu'au site.

L'objectif de l'invention est de fournir aux éleveurs un moyen de conserver les cadavres d'animaux dans de bonnes conditions sanitaires jusqu'à leur enlèvement par le service d'équarrissage. L'invention concerne ainsi un conteneur de stockage pouvant recevoir au moins un cadavre d'animal en vue de son ramassage subséquent par un véhicule du type des camions d'équarrissage. Ce conteneur est étanche, il permet de limiter tous les problèmes d'odeur, et d'éviter la vision des cadavres et la propagation des maladies pouvant subvenir durant le stockage provisoire des cadavres. Il est destiné plus particulièrement à contenir un ou plusieurs animaux de taille et de poids moyens à élevés, et sa contenance est adaptée au volume et au nombre d'animaux susceptibles de devoir être stockés à un moment donné sur le site d'élevage.

Un autre objectif de l'invention est d'assurer que d'une part le chargement du cadavre dans le conteneur, et d'autre part son déchargement dans la benne d'équarrissage, soient relativement aisés, à la fois pour l'éleveur et pour l'équarrisseur.

A cet effet, l'invention propose un conteneur de stockage selon la revendication principale, essentiellement constitué d'une structure rigide fermée comportant une ouverture latérale s'étendant sensiblement sur toute sa longueur et occupant sensiblement la moitié de ses surfaces latérales et supérieure, pour le chargement du cadavre dans le conteneur par glissement latéral lorsque la structure est posée sur le sol, cette ouverture étant obturable par une porte rotative. La structure comporte des moyens de préhension pour sa levée, et un fond entièrement basculant pour son déchargement en position levée au-dessus du véhicule de ramassage, par déversement du cadavre qu'il contient dans le véhicule.

De façon tout à fait avantageuse, le seuil de chargement du conteneur, lorsque celui-ci repose sur le sol dans sa position normale d'utilisation, est situé très près du niveau du sol. La présence d'une ouverture latérale, qui constitue sensiblement toute une face de la structure, permet alors que le cadavre puisse être glissé depuis le sol à l'intérieur de la structure, sans qu'il soit à aucun moment nécessaire de le soulever totalement. Ceci est particulièrement avantageux pour le chargement d'animaux de taille et de poids importants, qui ne peuvent pas être manipulés facilement.

Dans les conditions courantes d'utilisation du conteneur suivant l'invention, la porte rotative est en position fermée, et elle n'est ouverte que pour le chargement d'un cadavre dans le conteneur, ou pour la vérification du contenu de ce dernier par les services d'équarrissage.

Le transfert du cadavre dans la benne du camion d'équarrissage est également facilité par rapport aux pratiques habituelles.

En effet, c'est trop souvent encore que sur les sites d'élevage le chargement d'un cadavre dans la benne d'équarrissage demande la manipulation directe du cadavre par l'équarrisseur, au mépris de toutes les règles élémentaires d'hygiène. Dans la pratique, si on se réfère par exemple au cas des brebis, ce chargement est réalisé en attachant le cadavre, par une chaîne, corde ou grosse ficelle nouée autour d'une patte ou du cou, au crochet d'une grue, afin de le hisser au-dessus de la benne.

Au contraire, le déchargement des cadavres du conteneur dans la benne d'équarrissage ne demande aucune manipulation manuelle du cadavre. Il est avantageusement réalisé en tirant parti des moyens de levée portés par le camion, ou de tout autre moyen de levée indépendant dont peut disposer l'éleveur sur le site d'élevage. La structure suivant l'invention est pourvue de moyens de préhension qui permettent de la soulever, par exemple au moyen de la grue portée par le camion, et de la positionner au-dessus de la benne. Le déchargement des cadavres est ensuite effectué par basculement du fond de la structure, de manière à libérer les cadavres qui tombent dans la benne sous l'effet de leur poids.

En outre, l'utilisation du conteneur suivant l'invention permet ainsi avantageusement d'éviter que les services d'équarrissage n'aient à emporter, puis surtout à trier et à retraiter, les ficelles, cordes, sacs ou autres utilisés de façon classique par les éleveurs pour le stockage temporaire des cadavres ou par les équarrisseurs pour leur chargement dans la benne.

De façon tout à fait avantageuse, c'est le fond entier de la construction qui bascule, de façon à assurer que l'intégralité du contenu de la structure s'évacue lors de l'ouverture du fond.

Afin d'assurer que le stockage s'effectue de manière tout à fait hygiénique, la structure est entièrement lavable. Ses parois internes sont en outre toutes constituées de telle sorte qu'elles n'absorbent pas les liquides. La structure est notamment constituée de matériaux métalliques.

Le conteneur suivant l'invention présente un autre avantage qui est de constituer un point de repère pour l'équarrisseur venant ramasser les cadavres, le conteneur étant bien plus facilement reconnaissable qu'un cadavre posé dans un coin du site d'exploitation, voire dissimulé sous une bâche. Ceci est particulièrement avantageux dans les cas où l'équarrisseur n'est pas familier des habitudes de l'éleveur. L'éleveur dispose ainsi avantageusement d'un moyen permanent de stockage des cadavres d'animaux, que les équarrisseurs sauront rapidement identifier comme tel, mais dont personne excepté l'éleveur et l'équarrisseur ne pourra savoir, à un moment donné, s'il contient ou non un cadavre.

Suivant des modes de réalisation préférés dans la pratique industrielle, l'invention répond aux caractéristiques suivantes, mises en oeuvre séparément ou en chacune de leurs combinaisons techniquement opérantes.

Suivant une caractéristique secondaire de l'invention, la porte rotative est conçue de telle sorte qu'elle permette de dégager un volume de chargement important.

Ainsi, dans des modes de réalisation préférés de l'invention, elle est avantageusement articulée de telle sorte qu'elle s'escamote entièrement de l'ouverture de chargement. Dans des modes de réalisation préférés de l'invention, elle présente la forme d'un quart de cylindre fermé aux deux bouts, et elle coulisse à l'intérieur ou autour des parois latérales et supérieures fixes de la structure. On peut aussi prévoir qu'elle se relève à la verticale au-dessus de la structure.

D'une façon générale, toutes les formes de porte et tous les systèmes d'articulation peuvent être utilisés dans le cadre de l'invention, à partir du moment où ils assurent que le volume de chargement soit important, et que l'opération d'introduction du cadavre dans la structure ne soit pas entravée par des parois latérales ou supérieures de la structure. Le cadavre peut ainsi avantageusement être chargé dans la structure au moyen d'un engin de manutention par exemple.

Les mêmes résultats avantageux sont obtenus dans le cas où aucun moyen de levée n'est disponible pour permettre le déchargement du conteneur par son fond. Dans ce cas, la carcasse est attachée manuellement, et déchargée par traction et glissement sur le sol hors de la structure.

Afin de faciliter encore le déchargement manuel du cadavre, selon des modes de réalisation préférés de l'invention, le fond de la structure est avantageusement conçu de sorte à ne présenter aucun rebord.

Suivant une caractéristique secondaire de l'invention, le fond est apte à pivoter sous l'effet du poids du cadavre autour d'un axe longitudinal, et il est normalement maintenu, par un système de verrouillage, dans une position fermée dans laquelle le conteneur est étanche. De ce fait, le fond reste fermé même lorsque le conteneur est soulevé du sol, malgré la pression exercée sur lui par le poids des animaux.

Dans des modes de réalisation préférés de l'invention, le système de verrouillage est déverrouillable à distance. Ainsi, lorsque le conteneur se trouve dans sa position de déchargement au-dessus de la benne, il suffit à l'opérateur resté au sol de commander, à l'aide d'une cordelette par exemple, le déverrouillage pour libérer le fond, qui bascule alors sous l'effet du poids des cadavres.

Une fois que le contenu de la structure a été vidé dans la benne, l'invention assure de façon tout à fait avantageuse que la manoeuvre consistant à ramener le fond dans sa position fermée, avant qu'il soit reposé sur le sol pour sa prochaine utilisation, soit tout aussi aisée à mener à bien. A cet effet, suivant une caractéristique secondaire de l'invention, le fond est muni d'un système de rappel tendant à le ramener vers la position fermée, et le système de verrouillage est constitué de telle sorte qu'il s'enclenche de façon automatique lorsque le fond atteint la position fermée. Les opérations de refermeture et de reverrouillage du fond s'effectuent par conséquent de façon automatique et immédiate dès que les cadavres sont tombés de la structure. Il ne reste alors à l'opérateur qu'à manoeuvrer les moyens de levée pour ramener le conteneur au sol.

Suivant une caractéristique secondaire de l'invention, l'axe de pivotement du fond est décalé par rapport à son axe médian longitudinal.

L'amplitude du décalage doit être suffisante pour que l'ouverture qui est créée lors du basculement du fond soit assez vaste pour permettre le passage de l'animal à travers elle. Par contre, plus ce décalage est grand, et plus la force qui doit être exercée sur le fond par le système de rappel automatique afin de le ramener dans sa position fermée doit être importante. L'amplitude du décalage de l'axe de pivotement du fond est ainsi avantageusement choisie de manière à obtenir un compromis entre ces deux exigences opposées.

Par ailleurs, l'invention permet de manière avantageuse que les jus de décomposition ou autres produits par les cadavres soient récupérés et vidés au cours de l'opération même de déchargement des cadavres. Ainsi, suivant une caractéristique secondaire de l'invention, le fond de la construction est lisse, de sorte qu'il ne retient aucun liquide. Cette caractéristique facilite également de façon tout à fait avantageuse le nettoyage du fond.

En outre, le fond présente une forme de cuvette dans le creux de laquelle les jus se concentrent. Il résulte de cette caractéristique deux résultats particulièrement avantageux : d'une part, les cadavres ne baignent pas entièrement dans leur jus de décomposition, mais ils restent au contraire en grande partie au sec, ce qui permet de retarder leur décomposition. D'autre part, la vidange des jus, lorsque le fond bascule pour libérer les cadavres dans la benne d'équarrissage, est d'autant plus rapide que les jus sont concentrés dans cette zone précise du fond de la structure.

De plus, toujours pour répondre à cet objectif de l'invention qui est de faciliter l'évacuation des jus de décomposition des cadavres, dans des modes de réalisation préférés de l'invention, le point le plus bas de la cuvette est décalé par rapport à l'axe médian longitudinal du fond. Le décalage est avantageusement réalisé en sens opposé par rapport à celui de l'axe de pivotement du fond, ce qui permet, lorsque le fond atteint sa position de basculement maximal, que la vidange des jus soit immédiate.

Selon des modes de réalisation préférés de l'invention, les moyens de préhension de la structure sont constitués d'une potence surplombant la structure et munie d'un anneau pour sa préhension par un crochet. Tout autre moyen de préhension approprié pour la levée par une grue ou autre moyen de levée et le positionnement au-dessus d'une benne peut cependant être utilisé dans le cadre de l'invention.

Un objectif secondaire de l'invention est de faciliter le transport, au sein du site d'élevage, de l'animal du lieu de sa mort à son lieu de départ vers l'équarrissage ou de traitement local.

En effet, lorsqu'un animal décède, il se trouve suivant les cas soit dans un bâtiment de l'exploitation, soit dans les champs.

Dans le premier cas, l'éleveur doit transporter le cadavre hors du bâtiment, et le déposer à l'extérieur. Pour faciliter ce transport, dans un des modes de mise en oeuvre préférés de l'invention, la structure est munie de roues qui la rendent déplaçable manuellement dans les bâtiments ou dans les cours de l'exploitation.

Dans le cas où la bête est morte au champ, il est nécessaire de ramener le cadavre au siège de l'exploitation. Dans ce cas, si l'éleveur ne se rend pas compte du décès le jour même, mais plusieurs jours après, il trouve une bête à l'état de décomposition plus ou moins avancé selon la saison. En pratique, les solutions généralement utilisées pour ramener le cadavre jusqu'au siège d'exploitation sont soit le transport dans un véhicule d'exploitation, dont le seuil de chargement est toujours trop haut, d'où une manipulation physiquement pénible, doublé du problème de la manipulation manuelle d'une carcasse potentiellement en décomposition, mais aussi du voyage avec des odeurs extrêmes ; soit le transport sur la fourche ou dans le godet d'un tracteur, avec le risque de déchirement de l'animal, ce qui est également possible dans le premier cas.

Afin d'éviter ces inconvénients, selon un mode de réalisation préféré de l'invention, la structure est munie d'un attelage dit "trois points" pour son transport par les tracteurs agricoles.

Dans d'autres modes de réalisation préférés de l'invention, la structure est pourvue d'une paire de roues de type routières et d'un timon d'attelage pour sa traction par un engin motorisé.

Suivant une caractéristique secondaire de l'invention, au moins une des roues, celle qui est située du côté de l'ouverture latérale, est escamotable de manière à abaisser le seuil de chargement du conteneur par la porte, et rétractable de l'emprise de la porte. De cette façon, le mode chargement du cadavre dans la structure n'est absolument pas modifié, et il reste toujours réalisable par glissement depuis le sol.

Afin de ne pas empêcher le pivotement du fond basculant, suivant une autre caractéristique secondaire de l'invention, les roues ne sont pas reliées, comme il est usuel, par un essieu transversal placé sous la structure, mais elles sont montées individuellement sur deux longerons longitudinaux de la structure. Chaque roue possède en outre son système de suspension propre.

Par conséquent, l'éleveur peut charger l'animal dans le conteneur sur le lieu même de sa mort, et déplacer ensuite le conteneur à sa convenance. Le transport du cadavre ne présente plus aucune difficulté, et les risques de déchirement sont considérablement réduits. De plus, quand bien même ce serait le cas, l'impact serait limité puisqu'il n'y a plus alors à manipuler le cadavre.

Suivant une caractéristique secondaire de l'invention, ladite structure est délimitée par des parois thermiquement isolantes, lisses et non absorbantes. Ceci présente l'avantage de réduire par temps chaud la température à laquelle sont soumises les carcasses, et de ralentir leur décomposition. En outre, cette caractéristique permet également de pouvoir attendre d'avoir un poids suffisant de cadavres avant de déplacer les services d'équarrissage. L'usage du conteneur suivant l'invention présente alors un intérêt économique non négligeable pour les services d'équarrissage par la limitation du nombre de déplacements, et aussi un intérêt collectif car moins de camions circulent sur les routes.

Dans un des modes de réalisation préférés de l'invention, le conteneur est équipé d'un système de production du froid afin de diminuer sa température interne.

Dans des modes de réalisation préférés de l'invention, la structure est équipée sur une face extérieure d'un compartiment étanche pouvant contenir une ou plusieurs feuilles de papier. Ceci peut être particulièrement avantageux pour conserver à l'abri des intempéries, en l'absence de l'éleveur, les fiches d'identification des animaux destinées au service d'équarrissage. De même, les bons d'enlèvement des animaux peuvent y être déposés par le service d'équarrissage.

L'invention sera maintenant plus complètement décrite dans le cadre de caractéristiques préférées et de leurs avantages, en faisant référence aux figures 1 à 6 dans lesquelles :
- la figure 1 représente une vue générale d'un conteneur suivant l'invention ;
- la figure 2 représente une vue en coupe du conteneur de la figure 1 suivant le plan A-A, dans laquelle sont illustrées les positions d'ouverture/fermeture de la porte rotative et du fond basculant ;
- la figure 3 représente une vue générale d'un conteneur suivant un mode de réalisation préféré de l'invention légèrement différent;
- la figure 4 illustre le système de verrouillage du pivotement du fond basculant ;
- la figure 5 représente une vue générale d'un conteneur suivant l'invention équipé d'un attelage dit trois points ;
- et la figure 6 est une vue générale d'un conteneur suivant l'invention destiné à être tracté.

Le conteneur suivant l'invention est constitué de matériaux métalliques et/ou composites ou plastiques. Il est entièrement étanche. Il est lavable et il peut être désinfecté après utilisation.

Sa taille et son volume sont adaptés à différentes sortes d'animaux. Dans des modes de réalisation préférés de l'invention, il possède une taille suffisante pour contenir de un à trois cadavres d'animaux du type brebis ou chèvre.

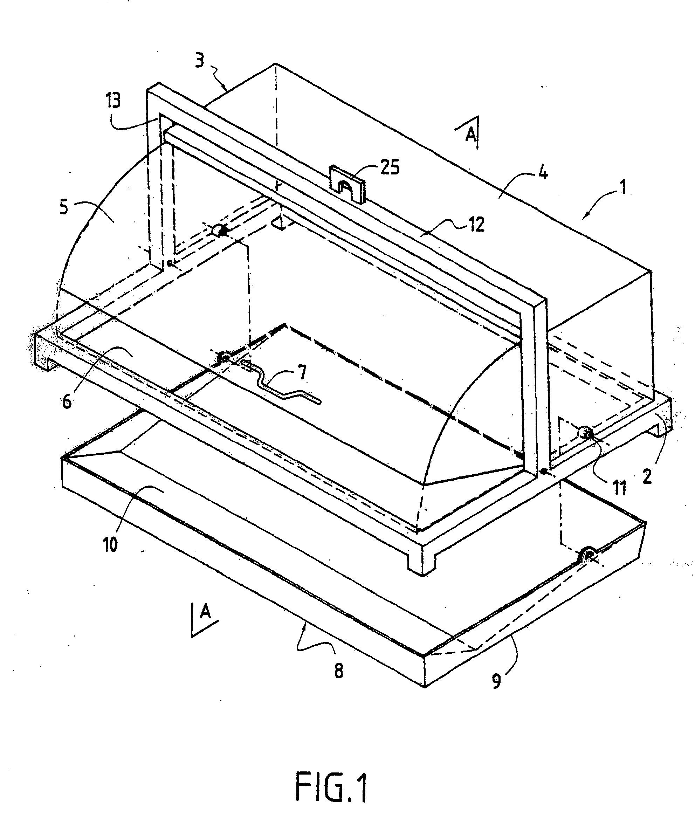

Comme représenté sur la figure 1, le conteneur est essentiellement constitué d'une structure rigide 1, dont la base est un cadre rectangulaire 2. Ce cadre présente un axe et un plan de symétrie longitudinaux.

Fixé sur le cadre 2 se trouve un bâti 3 qui forme les parois latérales et supérieures de la structure 1. Il est divisé en deux parties 4 et 5 situées de part et d'autre du plan de symétrie longitudinal du cadre 2.

La partie 4 est fixe. Dans le mode de réalisation préféré de l'invention représenté sur la figure, elle a une forme semi-parallélépipédique.

La partie 5 constitue une porte rotative pour la structure 1. Elle est mobile et articulée à pivotement autour de l'axe de symétrie longitudinal du cadre de base 2. Elle présente la forme d'un quart de cylindre fermé aux deux bouts, et des dimensions légèrement inférieures à celle de la partie fixe 4, de telle sorte qu'elle peut pivoter entièrement à l'intérieur de cette dernière, libérant ainsi une ouverture latérale 6 pour le chargement du conteneur. Le volume de chargement de la structure 1 est ainsi égal à environ la moitié de son volume interne. Il n'est limité par aucune paroi latérale ou supérieure.

On peut également envisager dans le cadre de l'invention d'articuler la porte 5 de façon différente, tout en assurant que cette articulation permette l'ouverture d'une entrée latérale de grande taille, afin de respecter l'objectif de l'invention qui est de faciliter le chargement des animaux morts dans le conteneur.

Ainsi, la porte 5 peut notamment être articulée par des gonds fixés sur la partie supérieure de la partie fixe 4, de telle sorte qu'elle peut être ouverte par un mouvement de rotation de 90 degrés vers le haut. Son blocage en position ouverte peut alors être assuré par des crochets ou des vérins à gaz, durant tout le temps nécessaire au chargement, au nettoyage du conteneur ou à toute autre opération à effectuer à l'intérieur de la structure 1, telle par exemple que le relevé d'identification officielle par l'équarrisseur.

La porte rotative 5 est pourvue d'une poignée 7 facilitant sa manipulation.

On peut avantageusement prévoir d'équiper la structure 1 d'un dispositif de verrouillage de la porte 5, de façon à empêcher qu'elle puisse être ouverte de façon intempestive.

Le fond 8 de la structure 1 est constitué par un cadre rectangulaire 9 qui s'adapte exactement à l'intérieur du cadre de base 2. Ce cadre de fond 9 présente une hauteur avantageusement comprise entre 10 et 20 cm, et de préférence égale à environ 15 cm. Il est inséré à l'intérieur du cadre de base 2 de façon à ce que les bords supérieurs des deux cadres soient au même niveau. Il en résulte que la structure 1, lorsqu'elle est posée au sol, présente un seuil de chargement très bas, pratiquement au niveau du sol. Il est par conséquent tout à fait aisé de charger un cadavre à l'intérieur du conteneur par simple glissement depuis le sol. Du fait de la faible hauteur du seuil de chargement, cette manoeuvre demande à l'éleveur relativement peu d'efforts physiques.

Le cadre de fond 9 supporte une paroi de fond lisse 10, notamment constituée d'une tôle. La paroi de fond 10 présente une forme de cuvette longitudinale de profondeur égale à la hauteur du cadre de fond 9. Elle est en outre dépourvue de rebords intérieurs, présentant au contraire une conformation en pentes douces. Cette forme de cuvette favorise de façon tout à fait avantageuse la récupération des jus de décomposition qui peuvent être produits par les cadavres, et leur concentration dans une zone bien précise du fond 8 en attendant leur vidange.

Le cadre de fond 9 est relié au cadre de base 2 articulé autour d'un axe longitudinal, au moyen de deux pivots 11. Les pivots 11 sont décalés par rapport à l'axe de symétrie longitudinal du cadre de base 2. Ils sont notamment situés environ aux deux tiers de la largeur de ce dernier. Cependant, n'importe quel autre décalage peut être envisagé dans le cadre de l'invention, afin de s'adapter à la taille des animaux que le conteneur est destiné à recevoir. Le fond 8 peut notamment être articulé autour d'un axe situé près d'un de ses bords, afin de libérer un espace de déchargement de surface maximale. Dans ce cas, il est cependant très difficile, une fois le déchargement des cadavres réalisé, de ramener le fond 8 de sa position de basculement maximal à sa position fermée de façon uniquement automatique, et une intervention manuelle est nécessaire à cet effet.

De façon tout à fait avantageuse, l'axe de pivotement du fond 8 et le point le plus bas de la cuvette 10 sont décalés l'un par rapport à l'autre, et même situés à l'opposé par rapport au plan de symétrie longitudinal du cadre de base 2. Dans le mode de réalisation préféré de l'invention représenté sur la figure, l'axe de pivotement du fond 8 est situé aux deux tiers de sa largeur, et la paroi de fond 10 passe par son minimum aux deux tiers opposés. De ce fait, la vidange du conteneur, et plus particulièrement l'élimination des jus sécrétés par les cadavres d'animaux, est immédiate lors de l'ouverture du fond basculant 8.

La structure 1 comporte des moyens de préhension 12 permettant de la soulever du sol. Dans des modes de réalisation préférés de l'invention, il s'agit d'une potence 13 fixée sur le cadre de base 2, dans le plan de symétrie longitudinal de ce dernier, et passant au-dessus du bâti 3. Sur la potence 13 est intégré un anneau 25 dans lequel peut être inséré un crochet porté par une grue ou de tout autre moyen de levée équipant les camions d'équarrissage. L'anneau 25 est avantageusement disposé sur la potence 13 de telle sorte que la structure 1 soulevée du sol demeure dans la même position que lorsqu'elle est posée sur le sol, le cadre de base 2 restant parallèle au sol.

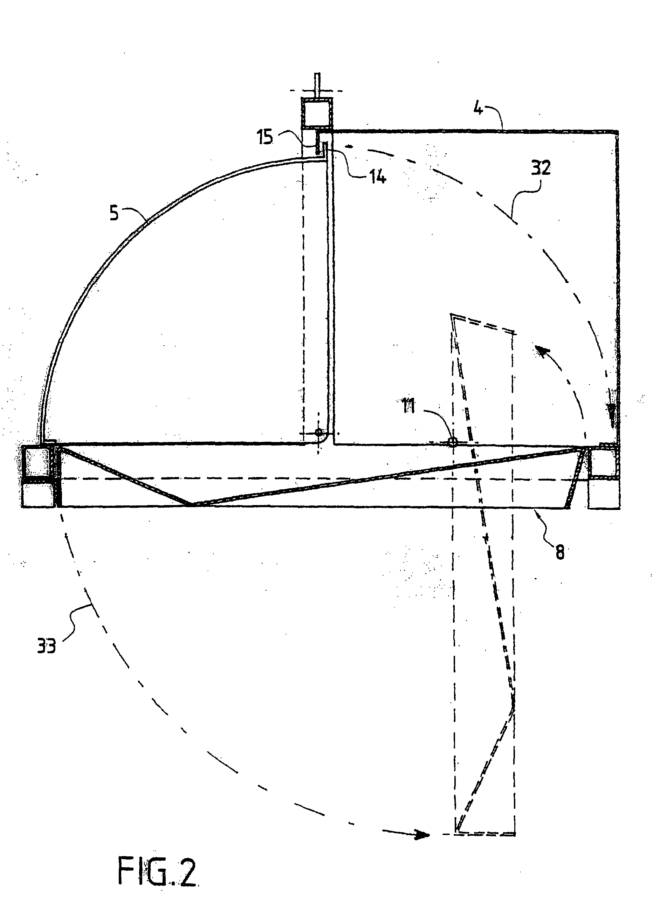

Une vue en coupe suivant le plan A-A du conteneur de la figure 1 est illustrée sur la figure 2.

Les mouvements respectifs que peuvent exécuter la porte rotative 5 et le fond basculant 8 y sont représentés en pointillés.

La porte 5 peut pivoter autour de son axe d'articulation, suivant la direction 32, et s'escamoter à l'intérieur de la partie fixe 4, de manière à dégager un volume de chargement de taille importante.

La porte 5 et la partie fixe 4 comportent sur leur bord supérieur des pans rentrants respectivement 14 et 15 situés en vis-à-vis l'un de l'autre et destinés à assurer l'étanchéité de la structure lorsque la porte 5 est en position fermée.

Lorsque la structure 1 est soulevée du sol d'une hauteur suffisante, le fond 8 peut pivoter autour de l'axe formé par les pivots 11, selon la direction 33. Lorsqu'il se trouve en position de basculement maximal, c'est-à-dire à la perpendiculaire par rapport à sa position fermée, la paroi de fond 10 est inclinée de telle sorte que la vidange se réalise de façon optimale.

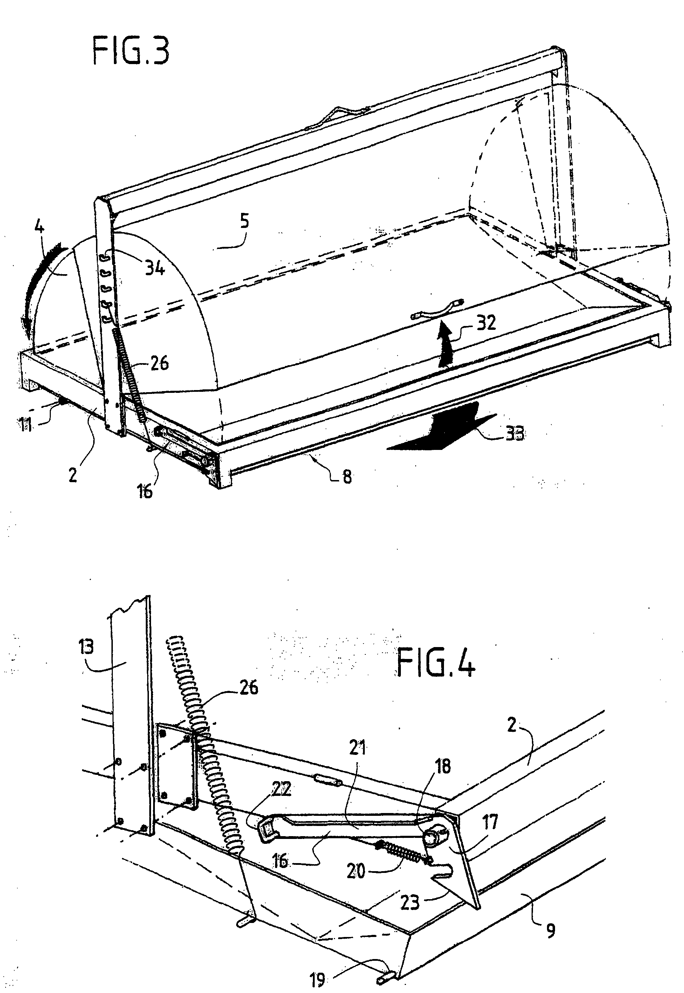

La figure 3 illustre un mode de réalisation différent de l'invention, dans lequel la partie fixe 4 présente également la forme d'un quart de cylindre. Dans ce cas, la porte rotative 5 pivote au-dessus de la partie fixe 4. On évite ainsi avantageusement qu'elle ne heurte durant sa rotation d'éventuelles parties des cadavres qui pourraient se trouver en contact avec les parois de la partie fixe 4.

Comme illustré sur cette figure, la structure 1 est munie d'un système de verrouillage 16 du pivotement du fond basculant 8, constitué de deux éléments identiques fixés sur deux bords opposés du cadre 2 perpendiculaires à l'axe de pivotement du fond 8, et à l'opposé de celui-ci par rapport au plan de symétrie longitudinal du cadre 2. Le rôle du système de verrouillage 16 est de maintenir le fond 8 en position normalement fermée.

De façon générale, le conteneur suivant l'invention est utilisé comme suit : la structure 1 est normalement posée sur le sol reposant sur son fond 8. Les cadavres d'animaux y sont introduits à la demande. Il suffit pour cela d'ouvrir la porte rotative 5, de façon à dégager l'ouverture latérale 6. Le seuil de chargement étant situé quasiment au niveau du sol, et le volume ouvert pour le chargement étant très important, cette manoeuvre ne présente pas de difficulté, et l'effort physique à fournir est réduit au minimum.

Le stockage est ensuite effectué dans des conditions hygiéniques, les cadavres étant maintenus enfermés dans la structure 1. Du fait de l'étanchéité de la structure 1, il n'y a aucune fuite, notamment des liquides provenant de la décomposition des cadavres. Les jus produits se concentrent au fond de la cuvette 10.

Au moment de transférer les cadavres dans la benne du camion d'équarrissage, il suffit de soulever la structure 1, par exemple au moyen d'une grue portant un crochet inséré dans l'anneau 25 de la potence 13, et de la positionner au-dessus de la benne. Le système de verrouillage 16 est alors déverrouillé : le fond bascule sous l'effet du poids des animaux, et se vide dans la benne. Grâce à la forme de cuvette de la paroi de fond 10, et à sa texture lisse, la vidange des jus de décomposition est rapide et totale.

Une fois la vidange effectuée, il suffit de ramener le fond 8 dans sa position initiale. A cet effet, un système de rappel automatique 26 fixé d'une part à la potence 13 et d'autre part au cadre de fond 9, ramène le fond 8 vers sa position fermée. Ce système de rappel est notamment constitué d'un ressort. Dans un mode de réalisation préféré de l'invention, il est prévu sur le côté de la potence 13 plusieurs points d'accrochage 34 du ressort 26, ce qui permet de pouvoir faire varier la force de ce système de rappel de sorte à trouver le meilleur compromis entre une ouverture suffisante du fond 8 pour permettre sa vidange totale, et le retour automatique du fond 8 à sa position de reverrouillage.

Le ressort 26 peut également être positionné entre le cadre de fond 9 et le cadre de base 2, près du plan de symétrie longitudinal de ce dernier, au pied de la potence 13 et à l'opposé de l'axe de pivotement du fond 8.

Il suffit ensuite d'enclencher à nouveau le système de verrouillage 16, et le conteneur peut à nouveau être reposé à terre, et utilisé pour un nouveau stockage, après un éventuel nettoyage.

Le système de verrouillage 16 est représenté de façon plus détaillée sur la figure 4, pour un de ses éléments, les deux éléments étant identiques.

Il est composé de deux crochets 17 placés à chaque bout du cadre de base 2, et reliés entre eux par un axe 18, de façon à être solidaires en rotation.

Un piton 19 est fixé, en vis-à-vis de chaque crochet 17, sur l'extérieur du cadre de fond 9. Dans la position fermée, le piton 19 est enclenché en butée dans le crochet 17, ce qui immobilise le cadre de fond 9 contre le cadre de base 2. Le crochet 17 est maintenu en position de fermeture par un ressort de rappel 20.

Chaque crochet 17 est solidaire d'un plat sur champ 21, soudé à l'une de ses extrémités au crochet 17, et formant un levier. Le plat sur champ 21 porte en outre un anneau 22 à son extrémité opposée au crochet 17.

Le déblocage de ce système de verrouillage 16 est assuré, lorsque la structure 1 est soulevée du sol, par l'opérateur qui, à partir du sol et à l'aide d'une cordelette reliée indifféremment à l'un des deux anneaux 22, exerce un mouvement de traction vers le bas. Ce mouvement fait pivoter les deux crochets 17 sur leur axe, libérant du coup les deux pitons 19. Le cadre de fond 9 n'est plus immobilisé contre le cadre de base 2, et il pivote sous l'effet du poids de la charge reposant sur la paroi de fond 10. Ce mouvement de pivot s'exerce tout naturellement, à partir du moment où la charge n'est pas répartie de façon symétrique par rapport à l'axe d'articulation du fond 8. Ceci est d'autant moins probable que cet axe est décalé par rapport au plan de symétrie longitudinal du cadre de fond 9. Le fond 8 bascule alors jusqu'à atteindre sa position de basculement maximal, et la structure 1 se vide intégralement.

Les crochets 17 comportent une face inférieure biseautée 23 qui facilite leur enclenchement automatique autour des pitons 19 lorsque le fond 8 revient vers sa position fermée, permettant ainsi d'assurer son blocage sans intervention extérieure.

Le verrouillage peut ainsi être automatique, ou, selon la puissance du système et son réglage, il peut ne rester à l'opérateur, ayant ramené le conteneur à mi-hauteur d'homme, qu'à accompagner le fond 8 jusqu'à sa position fermée et à effectuer le verrouillage avant de reposer l'ensemble au sol.

La structure 1 est équipée de moyens pour permettre son déplacement.

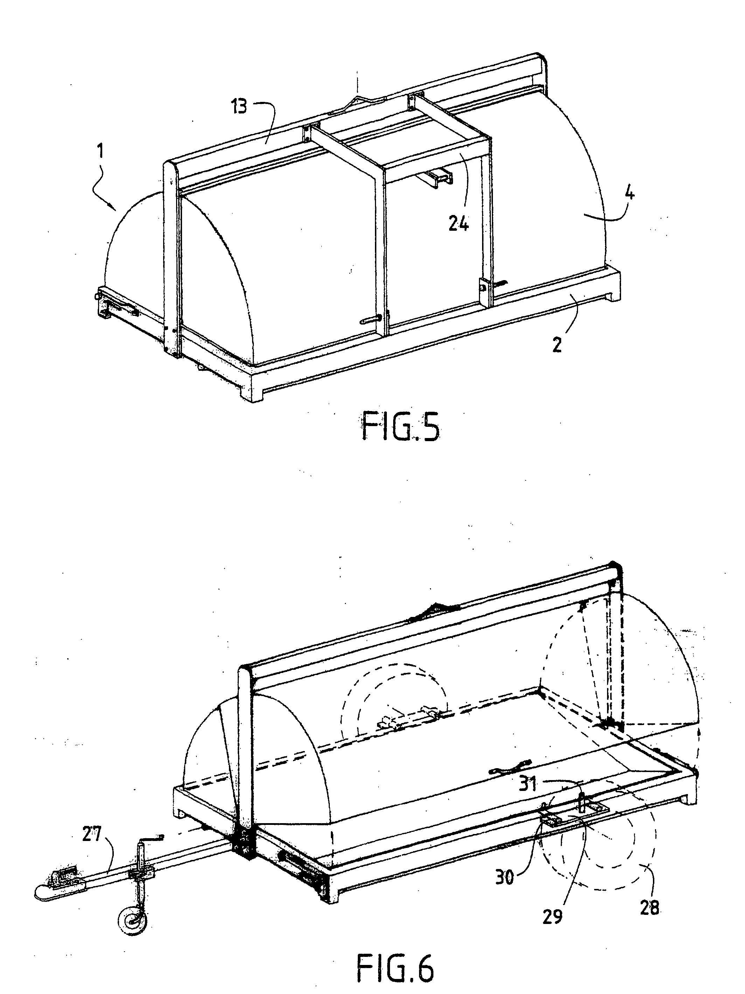

Dans des modes de réalisation préférés de l'invention, la structure 1 est équipée d'un système d'attelage trois points 24 en forme de harnais pour permettre sa manipulation par les tracteurs agricoles, comme représenté sur la figure 5. Cet attelage 24 est avantageusement adapté du côté de la structure 1 opposé à l'ouverture de chargement 6, de manière à ne pas gêner celui-ci. Il est relié d'une part au cadre de base 2, et d'autre part à la partie supérieure de la potence 13.

Dans ce mode de réalisation, de façon tout à fait avantageuse, la structure 1 a une longueur totale inférieure à la largeur autorisée pour un véhicule sur route, soit inférieure à 2m40, si bien que le conteneur peut être transporté sur les routes à l'arrière des tracteurs agricoles. Ceci est particulièrement avantageux dans les cas où l'éleveur doit ramener au siège de l'exploitation un animal mort dans un champ relativement éloigné et auquel on n'accède que par la route.

Suivant un autre mode de réalisation préféré de l'invention, la structure 1 comporte une potence adaptée pour qu'elle puisse être manipulée avec des fourches à palettes.

Suivant un mode de réalisation préféré de l'invention encore différent, le conteneur est conçu de façon à pouvoir être tracté sur route par un engin motorisé, comme illustré sur la figure 6. A cet effet, la structure 1 est équipée d'un timon d'attelage 27 et de deux roues 28 de type routières. De plus, il est avantageusement prévu dans ce cas que les éléments de signalisation réglementaires (non représentés sur les figures) équipent le conteneur, afin d'assurer que la circulation sur route s'effectue dans le respect de la réglementation.

Chacune des roues 28 est montée indépendamment de l'autre sur un longeron longitudinal 29 fixé au cadre de base 2 par deux axes 30. L'absence d'essieu permet avantageusement de ne pas empêcher le basculement du fond 8. Chaque roue 28 possède son système de suspension propre, notamment constitué d'un ressort hélicoïdal. L'utilisation de tout autre système de suspension individuel est cependant tout aussi envisageable dans le cadre de l'invention.

La roue 28 située du côté de l'ouverture de chargement est escamotable au moyen d'un levier 31, et rétractable de l'emprise de la porte, si bien que le seuil de chargement peut être facilement abaissé, et l'accès de chargement libéré.

On peut également envisager dans le cadre de l'invention d'adapter à la structure 1 quatre petites roues pour qu'elle puisse être déplacée manuellement à l'intérieur de l'exploitation, dans les bâtiments, ou les cours.

La description qui précède explique clairement comment l'invention permet d'atteindre les objectifs qu'elle s'est fixés. En particulier, elle fournit un conteneur de stockage dans des conditions hygiéniques des cadavres d'animaux de taille moyenne à grande, utilisable dans les sites d'élevage, et avantageusement conçu de telle sorte qu'il permet un chargement et un déchargement aisés de son contenu.

## Revendications

1. Conteneur de stockage d'au moins un cadavre d'animal en vue de son ramassage subséquent par un véhicule, ledit conteneur étant essentiellement constitué d'une structure rigide fermée (1) comportant une ouverture latérale (6) s'étendant sensiblement sur toute sa longueur et occupant sensiblement la moitié de ses surfaces latérales et supérieure, pour le chargement dudit cadavre par glissement lorsque ladite structure (1) est posée sur le sol, ladite ouverture (6) étant obturable par une porte rotative (5), des moyens de préhension (12) pour sa levée, et un fond (8) entièrement basculant pour son déchargement en position levée au-dessus dudit véhicule.

2. Conteneur selon la revendication 1, **caractérisé en ce que** ledit fond (8) est apte à pivoter sous l'effet du poids dudit cadavre autour d'un axe longitudinal décalé par rapport à son axe médian longitudinal, et **en ce qu'**il est maintenu par un système de verrouillage (16) dans une position fermée dans laquelle ledit conteneur est étanche.

3. Conteneur selon la revendication 2, **caractérisé en ce que** ledit fond (8) est lisse et **en ce qu'**il présente une forme de cuvette dont le point le plus bas est décalé par rapport à l'axe médian longitudinal dudit fond (8), d'un côté opposé audit axe de pivotement dudit fond (8).

4. Conteneur selon la revendication 2 ou 3, **caractérisé en ce que** ledit système de verrouillage (16) est déverrouillable à distance.

5. Conteneur selon l'une quelconque des revendications 2 à 4, **caractérisé en ce que** ledit fond (8) est muni d'un système de rappel (26) tendant à le ramener vers ladite position fermée, et **en ce que** ledit système de verrouillage (16) est constitué de telle sorte qu'il s'enclenche de façon automatique lorsque ledit fond (8) atteint ladite position fermée.

6. Conteneur selon l'une quelconque des revendications 1 à 5, **caractérisé en ce que** ladite structure (1) est pourvue d'une paire de roues (28) de type routières et d'un timon d'attelage (27) pour sa traction par un engin motorisé, lesdites roues (28) étant montées individuellement sur deux longerons longitudinaux (29) de ladite structure (1).

7. Conteneur selon la revendication 6, **caractérisé en ce qu'**au moins une desdites roues (28) est escamotable de manière à abaisser le seuil de chargement dudit conteneur par ladite porte (5), et rétractable de l'emprise de ladite porte (5).

8. Conteneur selon l'une quelconque des revendications 1 à 7, **caractérisé en ce que** lesdits moyens de préhension (12) sont constitués d'une potence (13) surplombant ladite structure (1) et munie d'un anneau (25) pour sa préhension par un crochet.

9. Conteneur selon l'une quelconque des revendications 1 à 8, **caractérisé en ce que** ladite structure (1) est munie d'un attelage dit "trois points" (24) pour son transport par les tracteurs agricoles.

10. Conteneur selon l'une quelconque des revendications 1 à 9, **caractérisé en ce que** ladite structure (1) est délimitée par des parois thermiquement isolantes lisses et non absorbantes.

## Patentansprüche

1. Behälter zum Lagern von wenigstens einem Tierkadaver zur späteren Entladung in ein Fahrzeug, der einen geschlossenen, ausgesteiften Aufbau (1) umfasst, der eine seitliche Öffnung (6) besitzt, die sich im Wesentlichen über seine gesamte Länge erstreckt und im Wesentlichen die Hälfte der oberen Seitenwände ausmacht, wobei dann, wenn der Behälter (1) auf dem Boden steht, die Öffnung (6) durch eine schwenkbare Tür (5) geöffnet werden kann, damit der Kadaver durch Gleiten ausgeladen werden kann, mit einer Tragevorrichtung (12) zum Anheben und mit einem Boden (8), der zum Entladen in einer angehobenen Position oberhalb des Fahrzeugs als Ganzes verschwenkt werden kann.

2. Behälter nach Anspruch 1, **dadurch gekennzeichnet, dass** der Boden (8) sich unter dem Gewicht des Kadavers um eine Längsachse in Bezug zu einer Mittelachse dreht, und dass der Boden durch ein Verschluss-System (16) in einer Stellung gehalten wird, bei der der Behälter geschlossen ist.

3. Behälter nach Anspruch 2, **dadurch gekennzeichnet, dass** der Boden (8) glatt ist und in der Art einer Wanne ausgebildet ist, deren tiefster Punkt in Bezug zur Mittelachse des Bodens (8) versetzt zu einer Seite ist, die der Schwenkachse des Bodens (8) gegenüber liegt.

4. Behälter nach Anspruch 2 und 3, **dadurch gekennzeichnet, dass** das Verschluss-System (16) aus Distanz auslösbar ist.

5. Behälter nach einem der Ansprüche 2 bis 4, **dadurch gekennzeichnet, dass** der Boden (8) mit einem Rückführsystem (26) ausgestattet ist, mit dem er in seine Verschluss-Stellung zurückführbar ist, und dass das Verschluss-System (16) so angelegt ist, dass es automatisch einklinkt, wenn der Boden (8) die geschlossene Stellung erreicht.

6. Behälter nach einem der Ansprüche 1 bis 5, **dadurch gekennzeichnet, dass** der Aufbau (1) mit einem Paar Laufräder (28) und einer Deichsel (27) versehen ist, damit er von einem Motorfahrzeug gezogen werden kann, wobei die Räder (28) einzeln an zwei Längsträgern (29) des Aufbaus (1) angebracht sind.

7. Behälter nach Anspruch 6, **dadurch gekennzeichnet, dass** wenigstens eines der Räder (28), um die Schwelle des Behälters in Bezug auf die Tür (5) abzusenken, einziehbar ist, und unter Schließwirkung der Tür (5) ausschwenkbar ist.

8. Behälter nach einem der Ansprüche 1 bis 7, **dadurch gekennzeichnet, dass** die Tragevorrichtung (12) aus einem Träger (13) besteht, der oberhalb des Aufbaus (1) angebracht ist und mit einem Ring (25) versehen ist, an dem ein Haken einhängbar ist.

9. Behälter nach einem der vorherigen Ansprüche 1 bis 8, **dadurch gekennzeichnet, dass** der Aufbau (1) mit einer "Drei-Punkt"-Deichsel (24) zum Transport mit einem landwirtschaftlichen Traktor ausgestattet ist.

10. Behälter nach einem der vorherigen Ansprüche 1 bis 9, **dadurch gekennzeichnet, dass** der Aufbau (1) von glatten, thermisch-isolierenden und nicht-absorbierenden Seitenwänden umfasst ist.

## Claims

1. Container for storing at least one animal carcase with a view to its subsequent collection by a vehicle, the said container being essentially made up of a closed rigid structure (1) having a lateral opening (6) extending substantially over its entire length and occupying substantially half its lateral and upper surfaces, for the loading of the said carcase by sliding when the said structure (1) is placed on the ground, the said opening (6) being closable by a rotating door (5), gripping means (12) for lifting it, and a bottom (8) which tips completely for the purpose of unloading it in the position in which it is lifted above the said vehicle.

2. Container according to claim 1, **characterised in that** the said bottom (8) is capable of pivoting, under the effect of the weight of the said carcase, about a longitudinal axis which is offset in relation to its longitudinal median axis, and **in that** it is held, by a locking system (16), in a closed position in which the said container is leakproof.

3. Container according to claim 2, **characterised in that** the said bottom (8) is smooth and **in that** it has the shape of a basin whose lowest point is offset in relation to the longitudinal median axis of the said bottom (8) on a side opposite the said axis of pivoting of the said bottom (8).

4. Container according to claim 2 or 3, **characterised in that** the said locking system (16) can be unlocked from a distance.

5. Container according to any of claims 2 to 4, **characterised in that** the said bottom (8) is fitted with a return system (26) which tends to bring it back towards the said closed position, and **in that** the said locking system (16) is constituted in such a way that it engages automatically when the said bottom (8) reaches the said closed position.

6. Container according to any of claims 1 to 5, **characterised in that** the said structure (1) is provided with a pair of wheels (28) of the road-going type and with a coupling shaft (27) for towing it by means of a motorised vehicle, the said wheels (28) being mounted individually on two longitudinal girders (29) belonging to the said structure (1).

7. Container according to claim 6, **characterised in that** at least one of the said wheels (28) is retractable in such a way as to lower the sill for loading the said container through the said door (5), and can be withdrawn from the influence of the said door (5).

8. Container according to any of claims 1 to 7, **characterised in that** the said gripping means (12) are made up of a bracket (13) projecting over the said structure (1) and fitted with a ring (25) for gripping it by means of a hook.

9. Container according to any of claims 1 to 8, **characterised in that** the said structure (1) is fitted with a so-called "three-point" coupling (24) for transporting it by means of agricultural tractors.

10. Container according to any of claims 1 to 9, **characterised in that** the said structure (1) is delimited by smooth and non-absorbent thermally insulating walls.
